Europäisches Patentamt

(19) European Patent Office

Office européen des brevets

(11) Numéro de publication: **0 088 033**
**A2**

(12) # DEMANDE DE BREVET EUROPEEN

(21) Numéro de dépôt: 83420029.7

(22) Date de dépôt: 25.02.83

(51) Int. Cl.³: **B 65 H 54/38**

(30) Priorité: 03.03.82 FR 8203873

(43) Date de publication de la demande:
07.09.83 Bulletin 83/36

(84) Etats contractants désignés:
BE DE GB IT

(71) Demandeur: VERDOL S.A.
2-12, Avenue Barthélémy-Thimonnier B.P. 159
F-69300 Caluire(FR)

(72) Inventeur: Mouterde, Pierre
6, rue de l'Ancienne Préfecture
F-69002 Lyon(FR)

(72) Inventeur: Mouterde née Valette, Anne
6, rue de l'Ancienne Préfecture
F-69002 Lyon(FR)

(74) Mandataire: Karmin, Roger et al,
Cabinet MONNIER 150, cours Lafayette
F-69003 Lyon(FR)

(54) Dispositif de brouillage de l'enroulement du fil lors de la réalisation d'une bobine.

㊗ Le levier usuel (11) du différentiel (1) est actionné par
une bielle (24) associée à un maneton (23) solidaire d'une
biellette (22) qui tourne en même temps que le pignon (21)
roulant par rapport à la périphérie d'une roue dentée (18)
angulairement fixe. Ainsi le maneton (23) décrit-il en projection verticale ou horizontale une sinusoïde ondulée.

Fig.1

EP 0 088 033 A2

Dispositif de brouillage de l'enroulement du fil lors de la
réalisation d'une bobine -

On sait que lors de la formation d'une bobine en particulier
sur une machine à bobiner, le fil est déposé sur une âme
dont la périphérie est en contact avec un tambour d'entraînement, le fil étant disposé entre la périphérie de l'âme et
le tambour. Le fil traverse un guide en relation mécanique
avec un tambour de trancanage qui lui imprime un mouvement
alternatif suivant l'une des génératrices de l'âme de la
bobine.

Si le mouvement de va-et-vient du guide-fil est parfaitement
synchronisé avec la rotation du tambour d'entraînement,
pour certains rapports de diamètres entre la bobine et ce
tambour, le fil se dépose à chaque tour au même endroit. On
assiste alors à la formation de zones de plus forte épaisseur
qui cesse lorsque le diamètre de ces zones atteint une
valeur significative par rapport au diamètre de la bobine
mesuré en dehors des zones en question.

Il est donc nécessaire, en vue d'éviter la formation des
zones considérées, de provoquer une variation artificielle
de dépose du fil autour du diamètre de la bobine, par
exemple en agissant sur l'angle de croisure. Ceci revient à
faire varier la vitesse du va-et-vient du guide-fil par
rapport à celle du tambour d'entraînement selon un cycle
déterminé.

Si ce cycle est court, le diamètre de la bobine reste
sensiblement constant pendant la durée du cycle de sorte
qu'au bout d'un cycle on revient au même point de départ,
si bien que le résultat n'est pas satisfaisant.

Si le cycle de variation de la vitesse du va-et-vient est
long, la variation de diamètre de la bobine (sensible
pendant un cycle long) va à l'encontre de la variation de
croisure (s'ils augmentent ensemble), on a donc aussi
formation de zones.

En conséquence il est nécessaire de faire varier la vitesse du va-et-vient du guide-fil suivant un cycle suffisamment court pour ne pas former de zones sur un diamètre de bobine constant, mais il faut également que le cycle soit suffisamment long pour tenir compte de la variation du diamètre de la bobine.

Les dispositifs connus du genre en question sont généralement constitués par un mécanisme formé d'un différentiel dont l'arbre de sortie est attelé à un cylindre de trancanage qui commande le va-et-vient du guide-fil, les deux satellites du mécanisme étant calés sur un axe tourillonnant à l'intérieur d'un levier oscillant sous l'action d'un excentrique. Cet excentrique imprime au levier des oscillations de forme sinusoïdale qui correspondent à un cycle moyen à court de la variation de la vitesse de va-et-vient du guide-fil.

Conformément à l'invention on superpose à un cycle long d'oscillations du levier supportant l'axe des satellites un mouvement supplémentaire à cycle court.

Suivant un mode d'exécution préféré de la disposition qui précède, le levier est articulé par l'une de ses extrémités à une bielle entraînée par un maneton porté par un satellite qui roule sans glisser sur la périphérie d'un disque circulaire fixe, de telle sorte que le maneton décrit une épicycloïde raccourcie.

Le dessin annexé, donné à titre d'exemple, permettra de mieux comprendre l'invention les caractéristiques qu'elle présente et les avantages qu'elle est susceptible de procurer :

Fig. 1 est une vue schématique en perspective d'un dispositif de brouillage établi conformément à l'invention.

Fig. 2 illustre la variation des coordonnées cartésiennes du maneton attaquant la bielle d'actionnement du levier oscillant du différentiel du dispositif suivant l'invention. On a porté les amplitudes l en ordonnées

et la vitesse angulaire wt en abscisses.

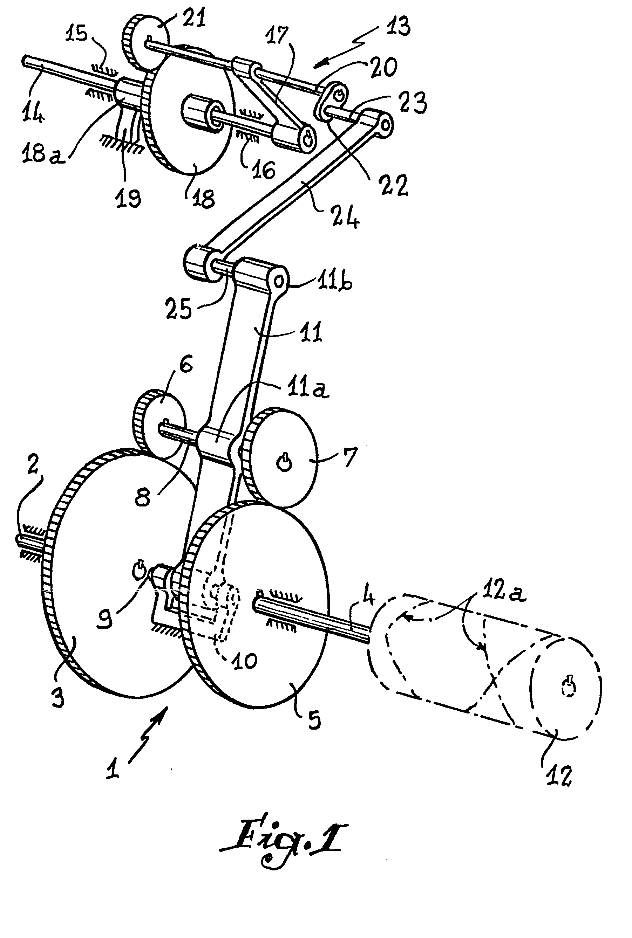

On a illustré en fig. 1 un dispositif de brouillage conforme à l'invention comprenant deux parties essentielles, soit un différentiel et un mécanisme de brouillage proprement dit.

Le différentiel qui a été affecté de la référence générale 1 est bien connu dans la pratique. Il comprend tout d'abord un arbre d'entrée 2 sur lequel est claveté un planétaire 3, et un arbre de sortie 4 sur lequel est calé un second planétaire 5 de diamètre inférieur à celui du premier 3. Sur la périphérie des deux planétaires engrènent deux satellites 6, 7 calés sur un axe commun 8. Entre les deux planétaires un tourillon 9 est associé au bâti de la machine par l'intermédiaire d'un étrier 10. Le tourillon qui se trouve dans l'axe géométrique des arbres 2 et 4, constitue pivot pour un levier 11 dans lequel l'axe 8 est monté à rotation libre grâce à la présence d'un bossage 11a.

De manière usuelle le levier 11 est associé à un excentrique qui lui imprime un mouvement pendulaire autour du tourillon 9. Ainsi lorsque l'arbre d'entrée 2 est entraîné en rotation, un cylindre de trancanage 12 claveté sur l'arbre de sortie 4 du différentiel 1 est animé d'une vitesse de rotation variant suivant un cycle sinusoïdal.

Comme on l'a expliqué plus haut, en vue de superposer au cycle sinusoïdal long un cycle court de variations de la vitesse de rotation du cylindre 12, on utilise un mécanisme affecté de la référence générale 13.

Ce mécanisme comprend tout d'abord un arbre 14, monté à rotation par rapport à des paliers 15, 16, et sur l'une des extrémités duquel est calé un bras 17. L'arbre 14 traverse avec jeu le moyeu 18a d'une roue dentée 18 maintenue angulairement fixe grâce à une patte 19 qui réunit le moyeu 18a au bâti de la machine. L'extrémité libre du bras 17 constitue palier pour la rotation d'un arbre 20 dont l'une des extrémités est angulairement solidaire d'un pignon 21. Comme la longueur du bras 17 est égale à la distance séparant les axes géométriques des arbres 14 et 20, la rotation de l'arbre 14 entraîne l'engrènement du pignon 21 par rapport à la périphérie de la roue dentée 18. L'extrémité de l'arbre 20 opposée au pignon 21 est solidaire d'une biellette 22 portant un maneton 23 dont la distance à l'axe géométrique de l'arbre 20 est préférablement inférieure au rayon du pignon 21. Ainsi lorsque l'arbre 14 tourne, le maneton 23 décrit-il une épicycloïde raccourcie. L'une des extrémités d'une bielle 24 dont l'extrémité opposée est articulée par un axe 25 au bout libre 11b du levier 11 est associée au maneton 23. De cette façon lorsque les arbres 2 et 14 tournent, l'arbre de sortie 4 du différentiel 1 présente une vitesse qui varie suivant la résultante des mouvements appliqués au levier 11.

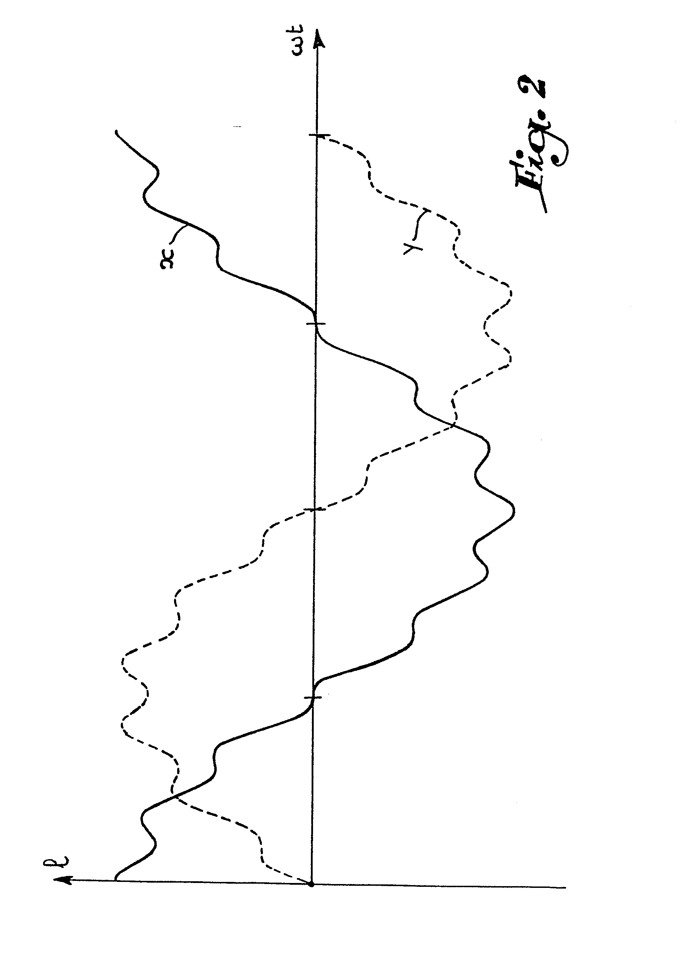

On a illustré en fig. 2 les deux courbes des abscisses x et des ordonnées y du maneton 23 et par conséquent du bout 11b du levier. Ces courbes sont chacune une sinusoïde comportant des crêtes et des creux, ce qui permet d'obtenir un mouvement du cylindre de trancanage 12 assurant un brouillage parfait de la dépose du fil sur l'âme d'une bobine.

On notera que le cylindre de trancanage 12 peut être à la tête d'une machine et que ses rainures 12a peuvent attaquer un doigt unique actionnant une tringle s'étendant sur toute la longueur de la machine et qui porte autant de guide-fils de trancanage que de postes de bobinage.

Pour obtenir un excellent résultat la vitesse de rotation de l'arbre 14 est beaucoup plus lente que celle de l'arbre d'entrée 2 du différentiel soit dans un rapport de 1 à 50, tandis que la rapport entre le diamètre du pignon 21 et de celui de la roue dentée est préférablement de 1 à 10.

Revendications

1. Dispositif de brouillage de l'enroulement du fil lors de la réalisation d'une bobine, du genre comprenant un différentiel (1) dont l'axe (8) des satellites (6, 7) est porté par un levier oscillant (11) de manière régulière suivant un cycle sinusoïdal, caractérisé en ce que des moyens (13) sont prévus pour appliquer à ce levier (11) un mouvement supplémentaire à cycle court.

2. Dispositif suivant la revendication 1, caractérisé en ce que le bout libre (11b) du levier (11) est articulé à l'une des extrémités d'une bielle (24) dont l'autre extrémité est associée à un maneton (23) porté par un disque (21) qui roule sans glisser sur la périphérie d'un organe circulaire (18) angulairement fixe.

3. Dispositif suivant la revendication 2, caractérisé en ce que le système d'entraînement de la bielle comporte un maneton (23) monté à l'extrémité d'une biellette (22) calée sur le bout d'un arbre (20) sur lequel est assujetti un pignon (21), ledit arbre étant entraîné en rotation autour de l'axe géométrique d'une roue fixe (18) afin que le pignon (21) engrène avec la denture de cette roue (18).

4. Dispositif suivant la revendication 3, caractérisé en ce que l'arbre portant la biellette (20) tourillonne dans l'extrémité libre d'un bras (17) fixé angulairement sur un second arbre (14) entraîné en rotation et qui traverse librement le moyeu (18a) de la roue fixe (18).

5. Dispositif suivant la revendication 4, caractérisé en ce que le moyeu (18a) de la roue (18) est assujetti au bâti du dispositif au moyen d'une patte (19).

0088033

1/2

Fig.1

Fig. 2